Europäisches Patentamt

European Patent Office

Office européen des brevets

(19)

(11) Numéro de publication: **0 276 186 B1**

(12) # FASCICULE DE BREVET EUROPEEN

(45) Date de publication du fascicule du brevet:
17.10.90

(51) Int. Cl.⁵: **B60N 2/20**

(21) Numéro de dépôt: 88400100.9

(22) Date de dépôt: 18.01.88

(54) **Dispositif de verrouillage à inertie pour siège de véhicule.**

(30) Priorité: 23.01.87 FR 8700805

(43) Date de publication de la demande:
27.07.88 Bulletin 88/30

(45) Mention de la délivrance du brevet:
17.10.90 Bulletin 90/42

(84) Etats contractants désignés:
BE DE ES GB IT NL

(56) Documents cités:
DE-A- 3 026 259
DE-A- 3 139 393
GB-A- 2 059 757
US-A- 4 252 370
US-A- 4 305 615

(73) Titulaire: ECIA - EQUIPEMENTS ET COMPOSANTS
POUR L'INDUSTRIE AUTOMOBILE, F-25400 Audincourt
(Doubs)(FR)

(72) Inventeur: Bianchi, François, 20, Combes Saint Germain,
F-25700 Valentigney(FR)
Inventeur: Fourrey, François, 34, Rue du Petit Chênois,
F-25200 Montbeliard(FR)
Inventeur: Deley, Serge, 1, Route d'Audincourt,
F-25230 Seloncourt(FR)

(74) Mandataire: de Morgues, Marie Emma et al, Cabinet
Lavoix 2, place d'Estienne d'Orves, F-75441 Paris
Cédex 09(FR)

## Description

La présente invention concerne les sièges de véhicule et tout particulièrement les sièges avant de véhicule à deux portes, devant être rabattus sur l'assise pour dégager l'accès aux places arrière.

Il est bien connu que de tels sièges doivent permettre en toutes circonstances un rabattement aisé et simple du dossier de façon qu'un passager puisse entrer ou sortir rapidement du véhicule quelle que soit la position de ce dernier, mais également assurer une grande sécurité à leurs occupants notamment contre les risques de basculement accidentels du dossier à la suite d'une décélération brusque ou d'un choc, ou simplement lors d'une inclinsaison du siège selon une pente accentuée.

De nombreux dispositifs de verrouillage ont déjà été proposés mais, ils présentent généralement l'inconvénient soit d'être complexes et par suite couteux à installer, soit d'exiger un effort important et une manœuvre difficile du dossier pour obtenir son rabattement, ce qui peut être très dommageable lorsqu'une sortie rapide du passager arrière est nécessaire.

Le US-A-4 305 615 divulgue un dispositif de verrouillage à inertie pour un siège de véhicule ayant une armature d'assise et une armature de dossier reliées entre elles par une biellette articulé à ses deux extrémités, dans lequel un organe de verrouillage pivotant comporte un évidement en V, ouvert vers l'avant du siège et rétréci à son entrée, de réception et de retenue d'une saillie portée par l'une des armatures.

L'organe de verrouillage est déplacé sous l'effet de son poids pour bloquer ou libérer la saillie de sorte que le rabattement du dossier s'effectue sans effort important.

La présente invention a pour but de fournir un dispositif de verrouillage à inertie qui tout en permettant un rabattement particulièrement facile et sans effort du dossier soit de réalisation simple et par suite peu couteuse tout en assurant une grande sécurité dans toutes les positions du véhicule.

Cette invention a en effet pour objet un dispositif à inertie du type ci-dessus dans lequel ladite saillie est l'axe d'articulation de l'armature de dossier et de la biellette de liaison à l'armature d'assise, et l'organe de verrouillage est monté pivotant à sa partie inférieure sur l'armature d'assise et est tel qu'en position normale d'utilisation, son centre de gravité (G) est légèrement décalé vers l'arrière par rapport à la verticale passant pas son axe de pivotement mais que ce centre de gravité bascule de l'autre côté de cette verticale sous l'effet d'un effort frontal ou d'une inclinaison accentuée.

Ainsi un effort frontal, dû à une décélération brusque ou à un choc, ou une inclinaison accentuée, tend à faire basculer le centre de gravité de l'organe de verrouillage vers l'avant, c'est à dire vers une position de verrouillage plus sûre, tandis qu'une simple pression sur le dossier fermer au venou de pivoter vers l'arrière et provoque la libération de l'articulation du siège.

Selon une autre caractéristique de l'invention, le dispositif comporte également des moyens de déverrouillage provoquant le pivotement de l'organe de verrouillage vers l'arrière, c'est à dire vers la position de déverrouillage, et simultanément le soulèvement de l'axe d'articulation de la biellette sur le dossier jusqu'à sa sortie de l'évidement.

Les moyens de déverrouillage comportent un levier articulé sur l'assise qui d'une part supporte l'axe d'articulation de la biellette et du dossier, et d'autre part est solidaire d'un doigt de basculement de l'organe de verrouillage.

Un déverrouillage lmanuel est ainsi toujours possible même si le dispositif de verrouillage est détérioré par un choc ou autre et la sécurité du passager arrière est assurée.

La description ci-dessous d'un mode de réalisation donné à titre d'exemple non limitatif et représenté aux dessins annexés fera d'ailleurs ressortirles avantages et caractéristiques de l'invention.

Sur ces dessins :

- la Fig. 1 est une vue schématique de côté d'un dispositif de verrouillage à inertie selon l'invention ;
- la Fig. 2 est une vue de dessus du dispositif de la Fig. 1;
- la Fig. 3 est une vue éclatée de ce même dispositif;
- la Fig. 4 est une vue analogue à la Fig. 1 du dispositif en position déverrouillée;
- la Fig. 5 illustre le fonctionnement du dispositif de déverrouillage lors d'une décélération, d'un choc frontal ou d'une pente accentuée.

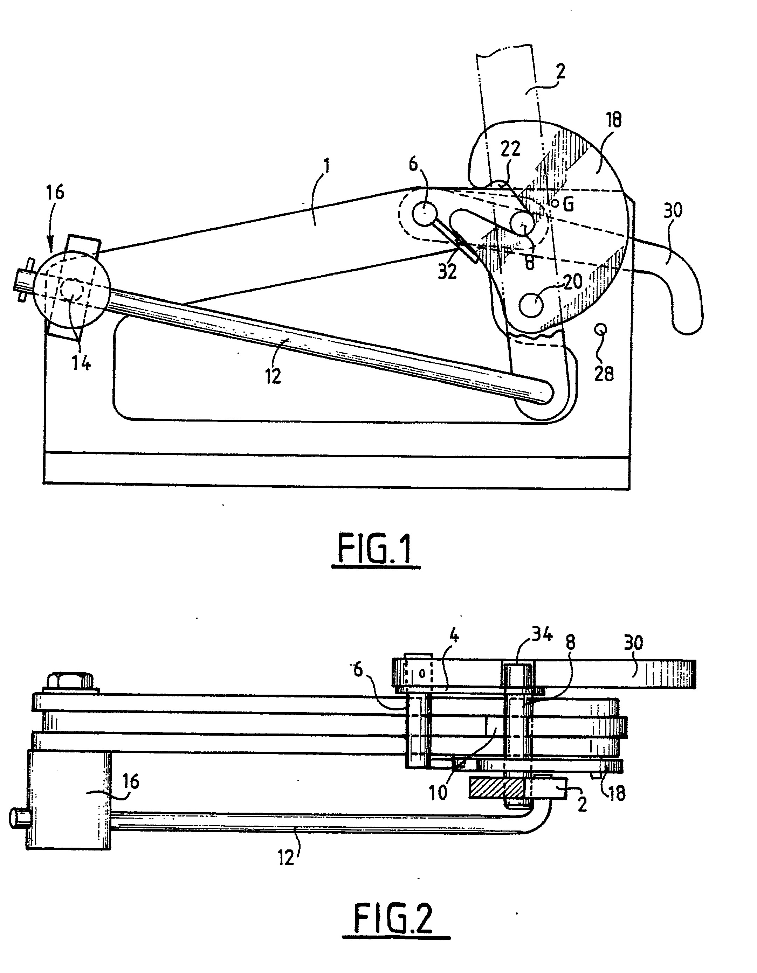

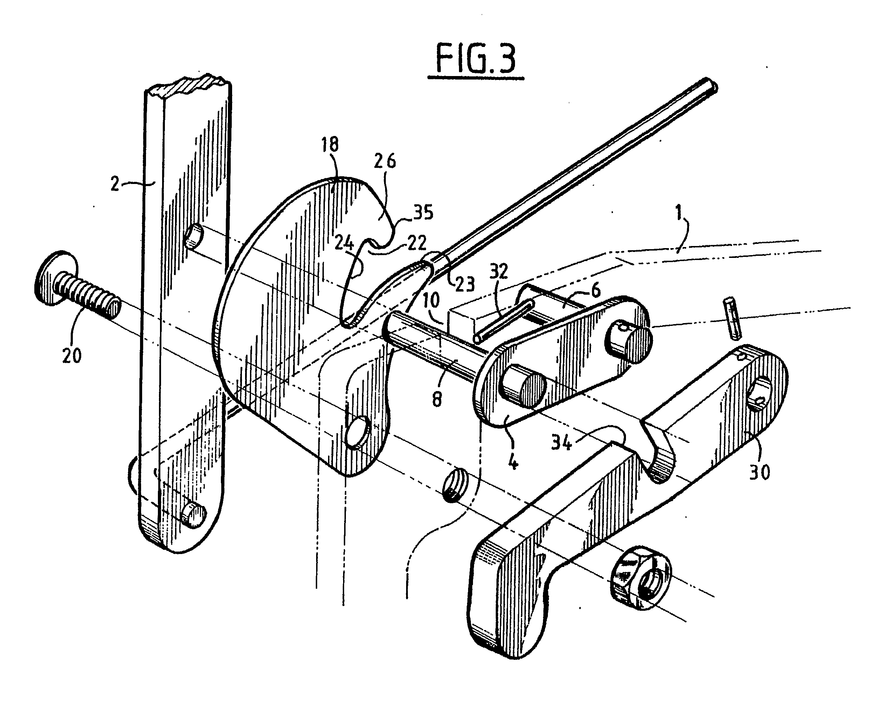

Les figures montrent schématiquement un élément d'armature d'assise 1 qui peut être monté de manière fixe ou mobile sur le plancher d'un véhicule. Une armature de dossier 2, dont seule la partie inférieure de l'un des montants latéraux est représentée sur les dessins, est reliée à l'élément d'armature 1 par l'intermédiaire d'une biellette 4 et de deux axes parallèles, respectivement 6 et 8, reliant cette biellette respectivement à l'élément d'armature 1 et au montant du dossier 2. Comme le montre plus particulièrement les Figs. 2 et 3 l'axe 8 traverse l'élément d'armature 1, la biellette 4 et le montant 2 étant situés de part et d'autre de cet élément. Cet axe 8 est toutefois reçu dans une encoche 10 ouverte à sa partie supérieure qui permet son déplacement vers le haut.

Dans le mode de réalisation représenté, le dossier 2 est en outre articulé à sa partie inférieure sue une tige 12 faisant partie d'un dispositif 16 de réglage et de maintien de l'inclinaison du dossier 2 qui est articulé en un point 14 sur l'assise et qui commande le déplacement axial de la tige 12 en vue du pivotement du dossier 2 autour de l'axe d'articulation 8 reposant dans l'encoche 10 de l'assise.

L'assise supporte en outre sur sa face opposée à la biellette 4 un organe de verrouillage 18 pivotant librement à sa partie inférieure sur un axe 20 solidaire de l'assise. L'organe de verrouillage 18 comporte un évidement 22 de forme générale en V, ouvert vers l'avant du siège, qui est délimité par deux profils de came, dont l'un 23 a une forme légèrement convexe tandis que l'autre 24 est sensiblement rectiligne avec une légère concavité, et qui est rétréci à son entrée par un crochet 26.

La forme de l'organe de verrouillage 18 est telle que son centre de gravité G se trouve, dans la position normale du siège et du véhicule représentée sur la figure 1, légèrement décalé vers l'arrière par rapport à la verticale passant par son axe de pivotement 20, et qu'il est retenu contre tout pivotement vers la position arrière de déverrouillage par l'axe 8.

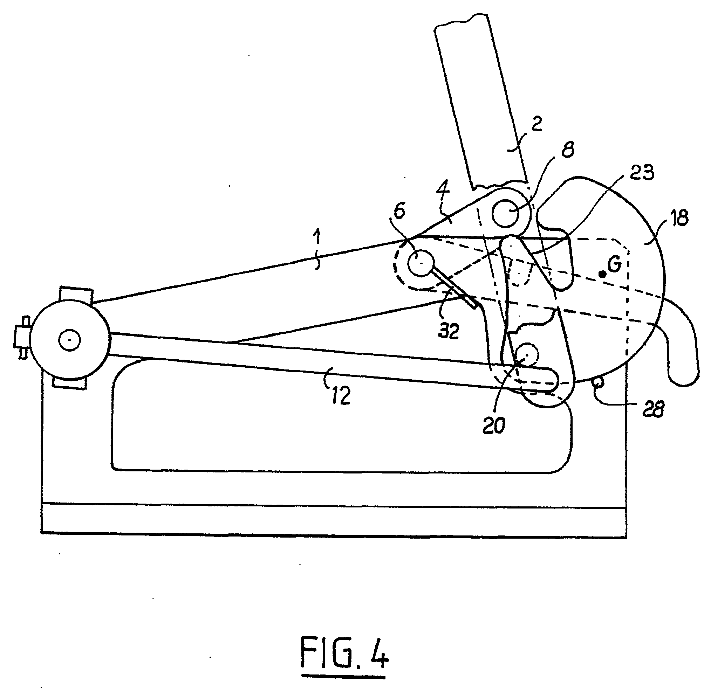

Une simple pression exercée vers le bas et vers l'avant sur la face arrière du dossier suffit alors pour rabattre ce dernier. Elle fait en effet pivoter la biellette 4 autour de l'axe 6 en soulevant l'axe 8, tandis que le verrou 18 qui est en déséquilibre tend à basculer vers l'arrière. La rampe 23 glisse donc sur l'axe 8 jusqu'au moment où cet axe 8 peut s'échapper de l'évidement 22. Une butée 28 arrête le basculement de l'organe 18 dans cette position comme le montre la Fig. 4. L'axe 8 et la biellette 4 sont alors libres et le mouvement de rabattement du dossier 2 peut se poursuivre afin de dégager compètement l'accès aux places arrière.

Il est clair que le redressement du dossier s'effectue de manière inverse en faisant pivoter l'armature 2 sur la tige 12 ainsi que la biellette 4 autour de son axe d'articulation 6 sur l'assise. L'axe d'articulation 8 vient se placer en face de l'entrée de l'évidement 22 du verrou 18 qui a été immobilisé par la butée 28, (Fig. 4) puis glisse sur la rampe de came 23, ce qui provoque le pivotement de l'organe de verrouillage 18 vers l'avant et le ramène progressivement dans sa position de fonctionnement normal représentée sur la Fig. 1.

Par contre dans le cas d'un choc frontal ou d'une décélération brusque, l'inertie de l'organe de verrouillage 18 tend à plaquer la rampe supérieure 24 contre l'axe 8 et le pivotement du dossier 2 est limité au déplacement de cet axe 8 dans l'évidement 22, le crochet 26 interdisant sa sortie hors de cet évidement. Le mouvement du dossier est donc bloqué.

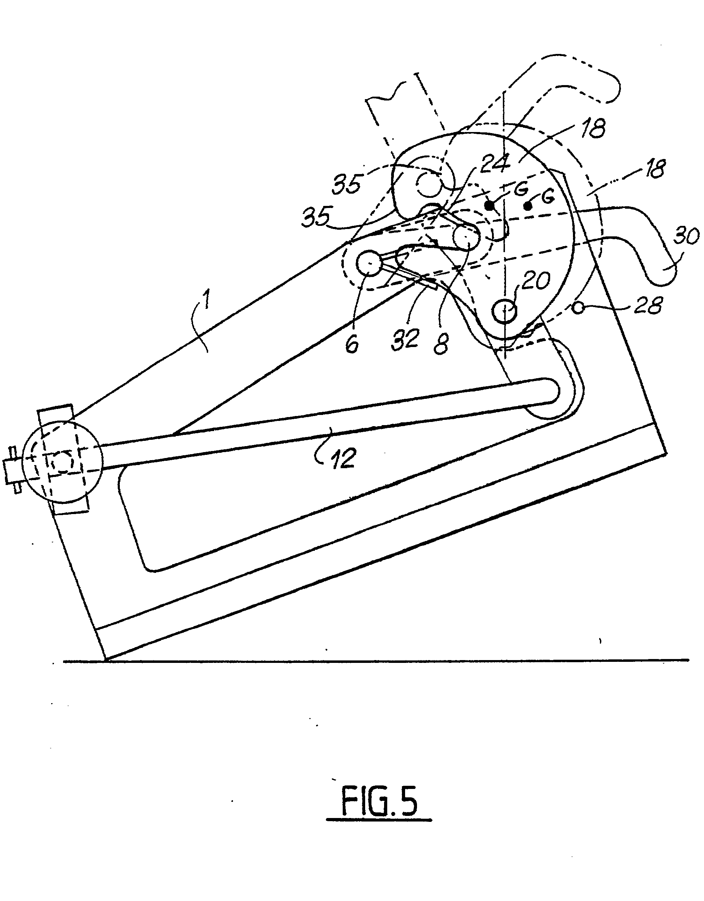

De même si, pour une raison quelconque tel qu'un réglage du dossier, un déplacement du véhicule sur une pente accentuée, un choc frontal ou autre, l'arrière de l'assise du siège est soulevé comme répésenté sur la Fig.5, l'organe de verrouillage 18 pivote autour de l'axe 20 vers l'avant du siège, et son centre de gravité G passe de l'autre côté de la verticale passant par son axe de pivotement 20. L'inertie de cet organe 8 tend alors à le faire basculer vers l'avant. En conséquence, si l'axe 8 quitte l'encoche 10 de l'assise 1, il suit la rampe 24 jusqu'à son blocage contre le crochet 26 et ne peut s'échapper de l'évidement 22. Le dossier 2 est donc solidement retenu et ne risque en aucun cas de se rabattre sur l'assise, c'est à dire de blesser l'occupant du siège.

Bien entendu le dispositif est associé à des moyens de déverrouillage comportant un levier 30 qui est solidaire de l'axe 6 d'articulation de la biellette 4 sur l'armature d'assise 1 et par suite, d'un doigt 32 fixé à l'extrémité de cet axe en regard de l'organe de verrouillage 18. Dans ce levier 30 est ménagée une encoche 34 de réception de l'axe 8 de l'articulation de la biellette 4 sur le dossier 2. Comme le montre plus particulièrement les Figures 2 et 3, le levier 30 est monté à côté de la biellette 4 c'est à dire à l'extrémité des axes 6 et 8 opposée au dossier 2. En outre, l'encoche 34 comme l'encoche 10 de l'assise 1 est de préférence légèrement inclinée par rapport à la verticale de façon à faciliter le pivotement de la biellette 4 et de l'axe 8 par rapport à cet organe.

Dans toutes les positions du siège le levier 30 permet le déverrouillage. En effet, son soulèvement ou plus exactement sont pivotement par rapport à l'assise 1 entraîne celui de l'axe 8 et de la biellette 4 mais également celui de l'axe 6, et par suite du doigt 32 qui repousse l'organe de verrouillage 18 contre la butée 28, comme indiqué en trait mixte sur la figure 5. L'axe 8 peut alors sortir de l'évidement 22 et le dossier 2 être rabattu.

L'organe de verrouillage a à nouveau basculé dans la position arrière de déverrouillage Le levier 30 peut donc retomber à sa position initiale, le verrou 18 ne risque pas de se déplacer.

Le redressement du dossier s'effectue en général de la manière décrite précédemment, le dossier entraînant l'axe d'articulation 8 jusqu'à l'entrée de l'évidement 22, ou au moins jusqu'à son contact avec la face exterieure 35 du crochet 26, et le faisant glisser sur cette face puis sur le profil de came 23, ce qui provoque le pivotement de l'organe 18 jusqu'à la position de verrouillage représentée en trait plein sur les Figures 1 et 5.

Par contre si, pendant que le dossier était rabattu et l'assise inclinée, par exemple parce que le véhicule était en stationnement sur une déclivité, une cause externe fortuite, telle qu'un choc arrière, a provoqué le basculement du verrou 18 vers l'avant de sorte qu'il est passé de la position en trait mixte à la position en trait plein de la figure 5, lors du redressement du dossier, l'axe 8 entre en contact avec le profil de came 35 et, de ce fait, repousse le verrou 18 vers l'arrière jusqu'à ce qu'il puisse pénètrer dans l'évidement 22 de ce verrou. L'axe 8 reprend alors sa place initiale au fond de cet evidement et l'organe de verrouillage sa position basculée vers l'avant. Le dossier 2 est à nouveau verrouillé.

Une telle manoeuvre est extrèmement simple et assure un déplacement sûr et rapide du dossier quelle que soit la position du véhicule. On dispose donc d'un dispositif de verrouillage qui protège le passager du siège contre tout rabattement accidentel, que ce soit sous l'effet d'un choc frontal, d'une décélération ou d'une inclinaison du véhicule, mais permet par contre un déverrouillage et un rabattement quasi immédiat lorsqu'un utilisateur le désire et notamment lorsque l'arrière du véhicule doit être accessible.

## Revendications

1. Dispositif de verrouillage à inertie pour un siège de véhicule ayant une armature d'assise (1) et une armature de dossier (2) reliées entre elles par une biellette (4) articulé à ses deux extrémités, ce dispositif comportant un organe de verrouillage pivotant (18) qui comporte un évidement en V (22), ouvert vers l'avant du siège et rétréci à son entrée, de réception et de retenue d'une saillie (8) portée par l'une des armatures du siège, caractérisé en ce que ladite saillie (8) est l'axe d'articulation de l'armature de dossier (2) et de la biellette (4) de liaison à l'armature d'assise (1), que l'organe de verrouillage (18) est monté pivotant à sa partie inférieure (en 20) sur l'armature d'assise (1) et que l'organe de verrouillage (18) est monté pivotant à sa partie inférieure (en 20) sur l'armature d'assise (1) et que l,organe de verrouillage (18) est tel qu'en position normale d'utilisation, son centre de gravité (G) est légèrement décalé vers l'arrière par rapport à la verticale passant par son axe de pivotement (20) mais que centre de gravité bascule de l'autre côté de cette verticale sous l'effet d'un effort frontal ou d'une inclinaison accentuée.

2. Dispositif suivant la revendication 1, caractérisé en ce qu'il comporte ne butée (28) d'arrêt du pivotement de l'organe de verrouillage (18) dans une position de déverrouillage dans laquelle l'entrée de son évidement (22) se trouve sur la trajectoire de l'axe (8) d'articulation de la biellettte (4) sur le dossier (2).

3. Dispositif suivant l'une des revendications 1 et 2, caractérisé en ce que l'évidement (22) de l'organe de verrouillage (18) est délimité par deux profils de came (23 et 24) dont l'un (24) est prolongé par un crochet de retenue (26).

4. Dispositif suivant l'une des revendications précédentes, caractérisé en ce que la surface extérieure de l'organe de verrouillage (18) forme, audessus de l'évidement (22), un profil de came (35) qui, lorsque l'organe de verrouillage est basculé vers l'avant, se trouve sur la trajectoire de l'axe (8) d'articulation de la biellette sur le dossier de sorte que, lors d'un redressement du dossier succédant à un tel basculement, cet axe (8) entre en contact avec le profil de came (35) et repousse l'organe de verrouillage vers l'arrière pour pénêtrer dans son évidemment (22) et assurer le verrouillage du dossier redressé.

5. Dispositif suivant l'une des revendications précédentes, caractérisé en ce que l'axe (8) d'articulation de la biellette (4) sur le dossier (2) traverse, entre ces deux organes, une encoche (10) de l'armature d'assise (1) lorsqu'il est en position normale d'utilisation.

6. Dispositif suivant l'une des revendications précédentes, caractérisé en ce quil comporte un levier de déverrouillage (30) solidaire de l'axe (6) d'articulation de la biellette sur l'assise et muni d'une encoche (34) de réception de l'axe (8) d'articulation de la biellette sur le dossier.

7. Dispositif suivant la revendication 6, caractérisé en ce que le levier (30) est solidaire également d'un doigt (32) fixé à l'extrémité opposée de l'axe (6) d'articulation de la biellette sur l'assise (1) et coopérant avec l'organe de verrouillage.

8. Dispositif suivant l'une des revendications précédentes, caractérisé en ce que l'armature de dossier (2) est reliée à son extrémité inférieure à un dispositif (12, 14, 16) de réglage de son inclinaison.

**Claims**

1. Inertia-responsive locking device for a vehicle seat having a seat cushion frame (1) and a headrest frame (2) interconnected by a link (4) articulated at its two ends, said device having a pivoting locking member (18) which has a V-shaped recess (22) open towards the front of the seat and which is narrow at its inlet, which receives and retains a projection (8) carried by one of the frames of the seat, characterized in that said projection (8) is the pivot pin of the headrest frame (2) and the link (4) for connecting to the seat cushion frame (1), the locking member (18) is mounted so as to pivot in its lower part (at 20) on the cushion frame (1) and the locking member (18) is such that in the normal position of use, its centre of gravity (G) is displaced rearwards with respect to the vertical passing through its pivoting axis (20), but said centre of gravity tilts to the other side of the vertical under the effect of a front force or a steep inclination.

2. Device according to claim 1, characterized in that it comprises an abutment (28) for stopping the pivoting of the locking element (18) to an unlocking position in which the entrance of said recess (22) is placed in the path of the pin (8) articulating the link (4) to the backrest (2).

3. Device according to either of the claims 1 and 2, characterized in that the recess (22) of the locking element (18) is defined by two cam profiles (23, 24) one of which is extended by a retaining hook (26).

4. Device according to any one of the preceding claims, characterized in that the outer surface of the locking element (18) defines, above the recess (2), a cam profile (35) which, when the locking element is swung forwardly, is located in the path of the pin (8) articulating the link to the backrest so that, when the backrest is moved back to its upper position following on such a swinging over, said pin (8) comes into contact with the cam profile (35) and urges the locking element in the rearward directin so as to enter said recess (22) and lock the backrest in the upper position.

5. Device according to any one of the preceding claims, characterized in that the pin (8) articulating the link (4) to the backrest (2) extends through a notch (10) in the seat frame (1) between said two elements when it is in a normal position of utilization.

6. Device according to any one of the preceding claims, characterized in that it comprises an unlocking lever (30) connected to the pin (6) articulating the link to the cushion and provided with a notch (34) for receiving the pin (8) articulating the link to the backrest.

7. Device according to claim 6, characterized in that the lever (30) is also fixed relative to a pin (32) which is fixed to the opposite end of the pin (6) articulating the link to the seat (1) and cooperates with the locking element.

8. Device according to any one of the preceding claims, characterized in that the backrest frame (2) is connected at the lower end threof to a device (12, 14, 16) for adjusting the inclination of the backrest frame.

**Patentansprüche**

1. Vorrichtung zur Trägheitsverriegelung für einen Fahrzeugsitz mit einem Sitzbeschlagteil (1) und einem Lehnenbeschlagteil (2), die miteinander über einen Schwingarm (4) verbunden sind, der an seinen beiden Enden gelenkig angebracht ist, welche Vorrichtung ein schwenkbares Verriegelungsbauteil (18) mit einer V-förmigen Aussparung (22) aufweist, die zur Vorderseite des Sitzes mündet, an ihrem Eingang verengt ist und einen Vorsprung (8) aufnimmt und hält, den eines der Sitzbeschlagteile trägt, dadurch gekennzeichnet, daß der Vorsprung (8) die Schwenkachse des Lehnenbeschlagteils (2) und des Schwingarmes (4) der Verbindung mit dem Sitzbeschlagteil (1) ist, das Verriegelungsbauteil (18) an seinem unteren Teil (bei 20) schwenkbar am Sitzbeschlagteil (1) angebracht ist, und das Verriegelungsbauteil (18) so ausgebildet ist, daß in der normalen Benutzungslage sein Schwerpunkt (G) leicht nach hinten bezüglich einer Vertikalen verschoben ist, die durch seine Schwenkachse (20) geht, während der Schwerpunkt zur anderen Seite der Vertikalen unter der Wirkung einer frontalen Beanspruchung oder einer starken Neigung schwenkt.

2. Vorrichtung nach Anspruch 1, dadurch gekennzeichnet, daß sie einen Anschlag (28) zum Anhalten der Schwenkbewegung des Verriegelungsbauteils (18) in einer Entriegelungslage aufweist, in der der Eingang seiner Aussparung (22) sich im Weg der Schwenkachse (8) des Schwingarmes (4) an der Lehne (2) befindet.

3. Vorrichtung nach einem der Ansprüche 1 und 2, dadurch gekennzeichnet, daß die Aussparung (22) des Verriegelungsbauteils (18) von zwei Nockenprofilen (23 und 24) begrenzt ist, von denen eines (24) durch einen Haltehaken (26) verlängert ist.

4. Vorrichtung nach einem der vorhergehenden Ansprüche, dadurch gekennzeichnet, daß die Aussenfläche des Verriegelungsbauteils (18) oberhalb der Aussparung (22) ein Nockenprofil (35) bildet, das dann, wenn das Verriegelungsbauteil (18) nach vorne geschwenkt ist, im Weg der Schwenkachse (8) des Schwingarmes an der Lehne derart liegt, daß bei einem anschließend an dieses Schwenken erfolgenden Zurückstellen des Schwingarmes die Achse (8) in einen Kontakt mit dem Nockenprofil (35) kommt und das Verriegelungsbauteil (18) in die Aussparung (22) nach hinten zurückdrückt und sicherstellt, daß die Verriegelung der Lehne wiederhergestellt wird.

5. Vorrichtung nach einem der vorhergehenden Ansprüche, dadurch gekennzeichnet, daß die Schwenkachse (8) des Schwingarmes (4) an der Lehne (2) zwischen diesen beiden Bauteilen durch eine Ausschnittskerbe des Sitzbeschlagteils (1) hindurchgeht, wenn sich dieses in der normalen Benutzungslage befindet.

6. Vorrichtung nach einem der vorhergehenden Ansprüche, dadurch gekennzeichnet, daß sie einen Entriegelungshebel (30) aufweist, der fest an der Schwenkachse (6) des Schwingarmes am sitz angebracht ist und mit einer Ausschnittskerbe (34) zur Aufnahme der Schwenkachse (8) des Schwingarmes an der Lehne versehen ist.

7. Vorrichtung nach Anspruch 6, dadurch gekennzeichnet, daß der Hebel (30) gleichfalls fest an einem Zapfen (32) angebracht ist, der am gegenüberliegenden Ende der Schwenkachse (6) des Schwingarmes am sitz (1) fest angebracht ist, und mit dem Verriegelungsbauteil zusammenarbeitet.

8. Vorrichtung nach einem der vorhergehenden Ansprüche, dadurch gekennzeichnet, daß das Lehnenbeschlagteil (2) an seinem unteren Ende mit einer Einrichtung (12, 14, 16) zum Regulieren seiner Neigung verbunden ist.

FIG.1

FIG.2

FIG.3

FIG. 4

FIG.5